Europäisches Patentamt

European Patent Office

Office européen des brevets

(11) Veröffentlichungsnummer: **0 236 770**
**A2**

(12) **EUROPÄISCHE PATENTANMELDUNG**

(21) Anmeldenummer: **87101892.5**

(22) Anmeldetag: **11.02.87**

(51) Int. Cl.4: **F16C 11/06**

(30) Priorität: **05.03.86 DE 3607150**

(43) Veröffentlichungstag der Anmeldung:
**16.09.87 Patentblatt 87/38**

(84) Benannte Vertragsstaaten:
**AT DE FR SE**

(71) Anmelder: **ROBERT BOSCH GMBH**
**Postfach 50**
**D-7000 Stuttgart 1(DE)**

(72) Erfinder: **Kehl, Georg**
**Taläckerstrasse 61**
**D-7000 Stuttgart 40(DE)**
Erfinder: **Schäfer, Ernst-Dieter**
**von Bülow-Strasse 16**
**D-7401 Pliezhausen 4(DE)**

(54) **Kugelgelenk.**

(57) Es wird ein leicht, beispielsweise mittels eines Roboters zusammenbaubares Kugelgelenk (2) vorgeschlagen. Das Kugelgelenk (2) hat einen Kugelkopf (3), einen Sicherungsring (4) und ein eine Kugelpfanne (12) bildendes äußeres Bauteil (5), in dem sich eine Umfangsnut befindet, deren Nutgrund eine Stützfläche (11) für den Sicherungsring (4) bildet. Die Stützfläche (11) ist im wesentlichen hohlkegelig begrenzt und umgibt den Sicherungsring (4) nach Art eines Mantels, wobei ein Erweiterungswinkel (A1) der Stützfläche (11) sich zur Mitte des Kugelkopfes (3) hin öffnet. Der Sicherungsring (4) drückt mit radialer Vorspannung gegen die Stützfläche (11) und wandert deshalb in Richtung deren größten Durchmessers (D4) und dabei in Richtung zur Mitte des Kugelkopfes (3), bis er an diesem anliegt.

# Kugelgelenk

## Stand der Technik

Die Erfindung geht aus von einem Kugelgelenk nach der Gattung des Hauptanspruchs. Durch die DE-PS 659 600 ist ein beim Zusammenbauen sich selbst sicherndes Kugelgelenk bekannt, das einen über einen Hals mit einer Stange verbundenen Kugelkopf, einen radial elastischen Sicherungsring und ein den Kugelkopf gelenkig aufnehmendes äußeres Bauteil hat, wobei das Bauteil für den Sicherungsring eine ringartig geschlossene Stützfläche besitzt, die von einer Umfangsnut gebildet wird. Es ist sehr schwierig, den Sicherungsring mit engen Toleranzen herzustellen und bei in dem äußeren Teil vormontierten Zustand vor der Montage des Kugelkopfes so zu positionieren, daß das Kugelgelenk störungsfrei beispielsweise mittels einer automatischen Montagevorrichtung oder eines Roboters zusammenbaubar ist.

## Vorteile der Erfindung

Das Kugelgelenk mit den kennzeichnenden Merkmalen des Hauptanspruchs hat den Vorteil, daß es trotz unvermeid licher Toleranzen der Hauptabmessungen des Sicherungsrings störungsfrei und in rationeller Weise mittels eines Roboters zusammenbaubar ist.

Durch die in dem Unteranspruch aufgeführten Maßnahme ist eine vorteilhafte Weiterbildung und Verbesserung des im Hauptanspruch angegebenen Kugelgelenks möglich. Die Weiterbildung mit den kennzeichnenden Merkmalen des Anspruchs 2 bewirkt eine formschlüssige Sicherung des Kugelkopfes in dem äußeren Bauteil. Dies hat den Vorteil, daß ein Zerlegen des Kugelgelenks nur durch Zerstörung wenigstens eines seiner Bauteile möglich ist. Unsachgemäßes Zerlegen und Wiederzusammenfügen ist dadurch in erwünschter Weise sofort erkennbar.

## Zeichnung

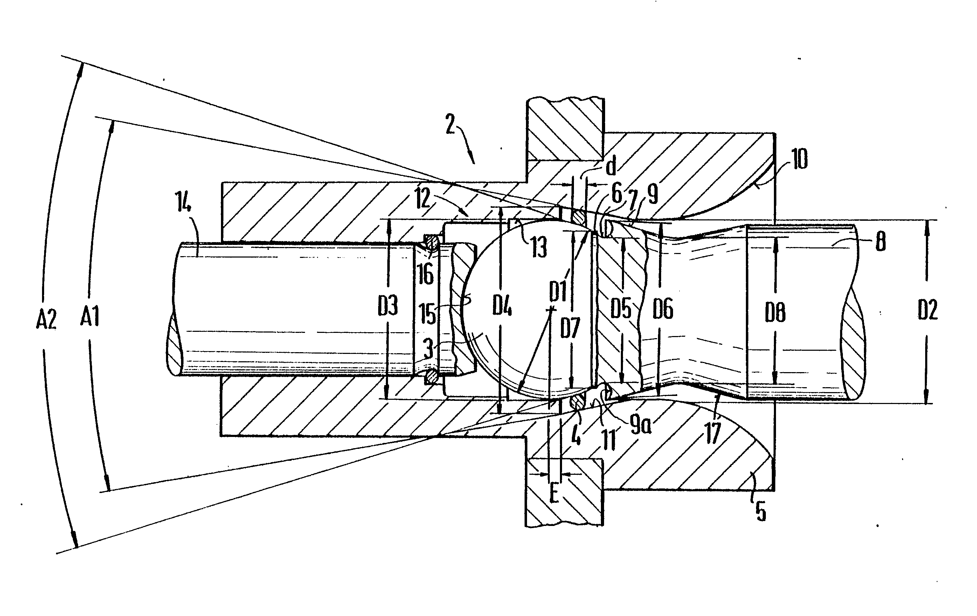

Ein Ausführungsbeispiel des erfindungsgemäßen Kugelgelenks ist in der Zeichnung dargestellt und in der nachfolgenden Beschreibung näher erläutert.

Beschreibung des Ausführungsbeispiels

Das dargestellte Kugelgelenk 2 hat einen Kugelkopf 3, einen Sicherungsring 4 und ein äußeres Bauteil 5, das den Kugelkopf 3 und den Sicherungsring 4 aufnimmt.

An den Kugelkopf 3 schließt sich ein im wesentlichen zylindrischer Ansatz 6, ein gegenüber diesem dünnerer Hals 7, eine Schulter 9 und an diese eine Stange 8 an. Ein Übergang zwischen dem Hals 7 und der Schulter 9 ist nach Art einer Hohlkehle 9a geformt.

Das äußere Bauteil 5 besitzt eine nach Art einer Trompetenöffnung geformte Führungsbohrung 10, eine Stützfläche 11 und eine Kugelpfanne 12. Im Beispiel besteht die Kugelpfanne 12 aus einer in dem äußeren Bauteil 5 in der Verlängerung der Führungsbohrung 10 angeordneten zylindrischen Aufnahmebohrung 13 und einem stangenförmingen Einsatz 14 mit einer konkav geformten Stirnfläche 15.

Der Kugelkopf 3 besitzt einen Durchmesser D1. Die Führungsbohrung 10 verengt sich auf einen Durchmesser D2, der geringfügig größer ist als der Durchmesser D1, so daß der Kugelkopf 3 hindurchschiebbar ist. Die Aufnahmebohrung 13 hat einen Durchmesser D3, der ebenfalls geringfügig grösser ist als der Durchmesser D1, so daß der Kugelkopf 3 innerhalb der Aufnahmebohrung 13 beweglich ist. Die konkave Stirnfläche 15 hat einen Krümmungsradius, der vorzugsweise so groß ist wie die Hälfte des Durchmessers D1. Der Sicherungsring 4 besteht aus einem Stück Federstahldraht, der den Durchmesser d aufweist. Der Hals 7 hat einen Durchmesser D5, der wenigstens um das Doppelte des Drahtdurchmessers d kleiner ist als der Durchmesser D2 der Führungsbohrung 10. Die sich in Richtung der Stange 8 an den Hals 7 anschließende Schulter 9 hat einen Durchmesser D6, der höchstens so groß ist wie der Durchmesser D2. Der Innendurchmesser des Sicherungsringes 5 ist in dessen Ursprungszustand kleiner als der Durchmesser D6 der Schulter 9. Dadurch ist es möglich, den Sicherungsring 4 neben der Schulter 9 um den Hals 7 zu legen und beim Einschieben des Kugelkopfes 3 in das Bauteil 5 mittels der Schulter 9 durch die Führungsbohrung 10 und - schließlich in Ausrichtung zur Stützfläche 11 zu bewegen.

Die Stützfläche 11 wird gebildet von einem im wesentlichen sich kegelartig erweiternden Bohrungsabschnitt, der sich an die Führungsbohrung 10 anschließt und sich in Richtung zur Mitte des Kugelkopfes 3 erweitert. Angrenzend an die Aufnahmebohrung 13 hat die Stützfläche 11 ihren größten Durchmesser D4. Eine gedachte Bezugsebene, in der der Durchmesser D4 liegt, hat beispielsweise einen von der Mitte des Kugelkopfes 3 sich in Richtung der Stange 8 erstreckenden Abstand E. Im nicht eingebauten Zustand hat der Sicherungsring 4 einen äußeren Durchmesser, der beispielsweise so groß wie der Durchmesser D4 ist. Infolgedessen drückt der Sicherungsring 4 radial nach außen gegen die Führungsfläche 11, wenn er durch die Führungsbohrung 10 hindurch mittels der Schulter 9 in Ausrichtung zu der Stützfläche 11 geschoben ist. Die kegelförmige Stützfläche schließt mit ihrer Mantelfläche einen Erweiterungswinkel A1 ein, der derart gewählt ist, daß der Sicherungsring 4 infolge seiner radialen Vorspannung in Richtung des größten Durchmessers D4 der Stützfläche 11 zu gleiten vermag. Der Erweiterungswinkel A1 ist deshalb so zu wählen, daß er mindestens dem doppelten Wert eines Reibwinkels entspricht, der sich zwischen dem Sicherungsring 4 und der Stützfläche 11 beim Verschieben des Sicherungsrings 4 ergibt. Beim selbsttätigen Verschieben legt sich der Sicherungsring 4 an den Kugelkopf 3 an.

Sobald der Sicherungsring 4 an der Stützfläche 11 und an dem Kugelkopf 3 anliegt, befindet sich zwischen dem Sicherungsring 4 und dem Kugelkopf 3 eine gekrümmte Berührungslinie. Ein gedachter Berührungskegelmantel, der den Kugelkopf 3 entlang der Berührungslinie tangiert, hat einen Öffnungswinkel A2. Ausgehend von dem Durchmesser D1 des Kugelkopfes 3 sind der Durchmesser d des Sicherungsringes 4, der Durchmesser D4 und der Abstand E seiner Bezugsebene von dem Mittelpunkt des Kugelkopfes 3 so gewählt, daß der Öffnungswinkel A2 höchstens um das Doppelte des bereits erwähnten Reibwinkels größer ist als der Erweiterungswinkel A1. In folgedessen läßt sich die Kontur der Stützfläche 11 ohne weiteres konstruieren, wenn von dem beispielsweise durch Versuche ermittelbaren Reibwinkel ausgegangen wird, und wenn für einen vorgegebenen Durchmesser D1 des Kugelkopfes der Durchmesser d des Drahtquerschnittes des Sicherungsrings 4 vorgewählt wird. Im dargestellten Beispiel beträgt der Durchmesser d etwa 12 % des Durchmessers D1.

Beim Betrieb des zusammengebauten Kugelgelenks 2 werden von außen auf die Stange 8 wirkende Druckkräfte über den Hals 7 auf den Kugelkopf 3 übertragen. Der Kugelkopf 3 drückt seinerseits gegen die konkave Stirnfläche 15 des stangenförmigen Einsatzes 14, der sich beispielsweise über einen Drahtring 16 an dem äußeren Bauteil 5 abstützt. Wie bereits erwähnt, ist der Sicherungsring 4 in der Lage, innerhalb der im wesentlichen kegelig begrenzten, Stützfläche 11 in Richtung zu deren großem Durchmesser D4 zu wandern und sich dabei an den Kugelkopf 3 spielfrei anzulegen. Wirken nun anstelle von Druckkräften an der Stange 8 Zugkräfte, so drückt der Kugelkopf 3 den Sicherungsring 4 gegen die Stützfläche 11. Infolge der in der vorstehend beschriebenen Weise gewählten Größe des Erweiterungswinkels A1 und des Öffnungswinkels A2 tritt eine reibungsbedingte Verklemmung des Sicherungsrings 4 entlang der Stützfläche 11 auf, so daß sich der Kugelkopf 3 entsprechend seines zulässigen Verformungsvermögens nur unwesentlich von der konkaven Stirnfläche 15 entfernt und nach der Belastung zurückkehrt. Dadurch ist der Kugelkopf 3 praktisch spielfrei relativ zur Kugelpfanne 12 gesichert.

Es kann nicht ausgeschlossen werden, daß der vorstehend beschriebene und durch Versuche ermittelte Reibwinkel sich während des Betriebs des Kugelgelenks 2 verändert und dabei kleiner wird. Desweiteren kann nicht ausgeschlossen werden, daß, während Zugkräfte an der Stange 8 wirken, diese Stange und demgemäß auch der Kugelkopf Schwenkbewegungen zum äußeren Bauteil 5 ausführt. Sowohl ein kleiner gewordener Reibwinkel als auch die Schwenkbewegungen des Kugelkopfes 3 können eine Relativbewegung des Sicherungsrings 4 zur Stützfläche 11 bewirken in dem Sinn, daß der Sicherungsring 4 in Richtung der Führungsbohrung 10 wandert oder kippt. In einem solchen Fall nähert sich der Sicherungsring 4 oder lediglich ein Teilstück des Sicherungsringes 4 dem Ansatz 6 und legt sich gegen diesen an. Der Ansatz 6 hat einen Durchmesser D7, der größer ist als der Durchmesser D2 abzüglich dem doppelten Wert des Durchmessers d. Infolgedessen kann der äußere Durchmesser des Sicherungsrings 4 nicht soweit elastisch verkleinert werden, daß der Sicherungsring 4 durch die Führungsbohrung 10 mit dem Durchmesser D2 entweichen könnte. Der Ansatz 6 ergibt zusammen mit dem Sicherungsring 4 und der Stützfläche 11 eine formschlüssige Sicherung gegen Herausziehen des Kugelkopfes 3 aus dem Bauteil 5. Um Schwenkbewegungen von erwünschter Größe ausführen zu können, hat die relativ dick ausgebildete Stange 8 im Bereich der Führungsbohrung 10 eine Einschnürung 17 mit einem kleinsten Durchmesser D8.

Wie bereits erwähnt, wird der Sicherungsring 4 vor dem Einschieben des Kugelkopfes 3 in das Bauteil 5 benachbart zu der Schulter 9 um den Hals 7 gelegt. Infolgedessen wirkt die Stange 8 als Montagewerkzeug für das Einbauen des Sicherungsringes 4 in das Bauteil 5. Dies hat den Vorteil, daß zum Einbauen des Kugelkopfes 3 in das Bauteil 5 lediglich dieser Kugelkopf 3 etwa in Ausrichtung zu der Führungsbohrung 10 zu bringen und dann einzuschieben ist. Das Einbauen des Sicherungsringes 4 sowie seine endgültige Ausrichtung zum Kugelkopf 3 erfolgen dann ohne weiteres Zutun. Dadurch ist das Zusammenbauen in einfacher Weise mittels eines Montageautomaten bzw. Roboters möglich.

**Ansprüche**

1. Kugelgelenk mit einem Kugelkopf, der mit einer Stange fest verbunden ist, mit einem radial elastischen Sicherungsring, der in einem Bereich zwischen der Mitte des Kugelkopfes und der Stange an dem Kugelkopf anliegt, und mit einem äußeren Bauteil, das den Kugelkopf nach Art einer Pfanne gelenkig aufnimmt und eine ringartig geschlossene in wesentlichen kegelig sich in Richtung der Kugelmitte hin erweiternde Stützfläche hat, an der sich der Sicherungsring im Sicherungsfall abstützt, dadurch gekennzeichnet, daß der Erweiterungswinkel (A1) der Stützfläche (11), die nach Art eines Mantels den Sicherungsring (4) umgibt, im wesentlichen mindestens dem doppelten Wert eines Reibwinkels zwischen dieser Stützfläche (11) und dem Sicherungsring (4) entspricht, daß der Sicherungsring (4) vor dem Einbauen in das äußere Bauteil (5) einen solchen Durchmesser hat, daß er im eingebauten Zustand mit radial nach außen wirkender Vorspannung an der Stützfläche (11) anliegt, daß ein gedachter Berührungskegelmantel, der den Kugelkopf (3) entlang einer zwischen dem Kugelkopf (3) und dem Sicherungsring (4) verlaufenden gekrümmten Berührungslinie tangiert, einen Öffnungswinkel (A2) hat, der sich ebenfalls zur Mitte des Kugelkopfes (3) hin öffnet und höchstens um den doppelten Wert des Reibwinkels größer ist als der Erweiterungswinkel (A1) der Stützfläche (11), daß in Einsteckrichtung des Kugelkopfes (3) der Stützfläche (11) eine trichterähnliche Führungsbohrung (10) vorgeordnet ist, und daß an die Stange (8) eine Schulter (9) angeformt ist, die ein durch die Führungsbohrung (10) schiebbares Einschiebewerkzeug bildet für den Sicherungsring (4) beim Einstecken des Kugelkopfes (3) bis zur Pfanne (12, 13, 14).

2. Kugelgelenk nach Anspruch 1, dadurch gekennzeichnet, daß sich unmittelbar an den Kugelkopf (3) in Richtung zur Stange (8) ein Ansatz (6) anschließt, dessen Durchmesser (D7) größer als der kleinste Durchmesser (D2) der Stützfläche (11) abzüglich dem Doppelten eines Drahtdurchmessers (d) des Sicherungsringes (4) ist.